(19) Europäisches Patentamt
European Patent Office
Office européen des brevets

(11) **EP 2 873 682 B1**

(12) **EUROPEAN PATENT SPECIFICATION**

(45) Date of publication and mention
of the grant of the patent:
**19.02.2020 Bulletin 2020/08**

(51) Int Cl.:
*C08G 59/32* (2006.01)   *C08G 59/36* (2006.01)
*C08G 59/50* (2006.01)   *C08K 3/04* (2006.01)

(21) Application number: **14193158.4**

(22) Date of filing: **14.11.2014**

(54) **EPOXY RESIN WITH LOW HUMIDITY CONTENT**

EPOXIDHARZ MIT NIEDRIGEM FEUCHTIGKEITSGEHALT

RÉSINE ÉPOXY À FAIBLE TENEUR EN HUMIDITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.11.2013 IT TO20130926**

(43) Date of publication of application:
**20.05.2015 Bulletin 2015/21**

(73) Proprietor: **Leonardo S.p.A.
00195 Roma (IT)**

(72) Inventors:
• **GUADAGNO, Liberata
  I-84084 Fisciano
  Salerno (IT)**
• **RAIMONDO, Marialuigia
  I-84025 EBOLI
  Salerno (IT)**
• **VITTORIA, Vittoria
  I-80128 NAPOLI (IT)**
• **VERTUCCIO, Luigi
  I-84038 TEGGIANO
  Salerno (IT)**
• **NADDEO, Carlo
  I-84098 PONTECAGNANO FAIANO
  Salerno (IT)**
• **LAMBERTI, Patrizia
  I-8014 NOCERA INFERIORE
  Salerno (IT)**
• **TUCCI, Vincenzo
  I-80127 NAPOLI (IT)**
• **RUSSO, Salvatore
  I-80010 QUARTO
  Napoli (IT)**
• **IANNUZZO, Generoso
  83100 AVELLINO (IT)**

(74) Representative: **Gerbino, Angelo et al
Jacobacci & Partners S.p.A.
Corso Emilia 8
10152 Torino (IT)**

(56) References cited:
**EP-A2- 0 356 946    GB-A- 2 027 715
GB-A- 2 208 231    US-A- 4 528 305**

• **PAGE S.A. ET AL: "Surface Energetics during
  Processing of Epoxy Resins", JOURNAL OF
  COLLOID AND INTERFACE SCIENCE, vol. 222,
  2000, pages 55-62, XP002726948,**
• **SONGJ. ET AL: "FLUORESENCE STUDIES OF
  DIAMINODIPHENYL SULFONE CURING AGENT
  FOR EPOXY CURE CHARACTERISATION",
  MACROMOLECULES, vol. 26, 1993, pages
  4818-4824, XP002726949,**
• **DATABASE WPI Week 201427 Thomson
  Scientific, London, GB; AN 2014-A58134
  XP002726950, & CN 103 374 207 A (NAT CENT
  NANOSCIENCE & TECHNOLOGY CHINA) 30
  October 2013 (2013-10-30)**

**Description**

The present invention relates in general to the field of epoxy resins for application in aeronautics, aerospace, automotive, nautical and, in general, infrastructural applications. In particular, the invention describes the development of epoxy resins that can also be loaded with fillers, so that they are particularly suitable as aeronautic materials.

PAGE S.A. ET AL., "Surface Energetic Evolution during Processing of Epoxy Resins", Journal of Colloid and Interface Science, vol. 222, 2000, pages 55-62, XP002726948 studies the evolution of surface energy during the entire curing process of epoxy resins.

GB 2 208 231 A discloses curable epoxy resin compositions.

EP 0 356 946 A2 discloses mixtures of epoxy resins for composite materials.

SONG J. ET AL., "Fluorescence Studies of Diaminodiphenyl Sulfone Curing Agent for Epoxy Cure Characterisation", Macromolecules, vol. 26, 1993, pages 4818-4824, XP002726949 reports about the fluorescence emissions and excitation of the aromatic diamine curing agent 4,4'-diaminodiphenyl sulfone.

US 4 528 305 A discloses cured epoxy resin compositions having a glass transition temperature over 149 °C, as well as fillers.

GB 2 027 715 discloses a conductive adhesive composition comprising a novolac epoxy resin and a carbamoyl blocked imidazole curing agent.

CN 103 374 207 A discloses an epoxy composite material containing conductive nanofillers.

The object of the present invention is to provide epoxy resins whose properties are improved in respect of the ones of the prior art.

Such object is attained by an epoxy resin obtainable by curing with an hardening agent an epoxy precursor formulation containing at least a tetrafunctional epoxy precursor and the reactive diluent 1,4-Butandioldiglycidylether (BDE), wherein the hardening agent is 4,4'-diaminodiphenyl sulfone (DDS) and the amount of the hardening agent is lower than the stoichiometric amount as prescribed in the present claims.

Preferred embodiments of the present invention are disclosed in the dependant claims. If not differently indicated, percentage values in claims and description are percentages by weight.

Advantageously, said tetrafunctional epoxy precursor is 4,4'-Methylenebis(N,N-diglycidylaniline) (TGMDA).

The epoxy resin of the invention may further incorporate conductive nanofillers, such as carbon nanotubes, in particular SWCNTs, DWCNTs and MWCNTs, carbon nanofibers, carbon black, exfoliated graphite and graphene layers.

The reactive diluent BDE reduces the moisture content and facilitates the nanofiller dispersion step. The reactive diluent BDE also proves to be beneficial for improving the cure degree of nanofilled epoxy mixtures. It increases the mobility of reactive groups resulting in a higher cure degree than the epoxy precursor alone. This effect is particularly advantageous for nanofilled resins needing higher temperature treatments compared to the unfilled resin, to reach the same cure degree. The reactive diluent BDE together with the epoxy precursor formulation not only allows to increase the cure degree, but also acts as flexibilizer.

Generally, the physical properties of epoxy resins strongly depend on the functionality of the epoxy precursor formulation: e.g. a tetrafunctional precursor assures good properties of the cured resin due to the high level of crosslinking density, but also brings about brittleness and poor resistance to crack propagation.

According to this invention, the toughness of the tetrafunctional epoxy precursor is increased by blending the epoxy precursor formulation with BDE that performs a double function, as flexibilizer and regulator of viscosity for a best dispersion of nanoparticles. The results on the physical properties of unfilled and nanofilled resins are very promising. In particular, the use of BDE with the epoxy precursor formulation reduces the moisture content, eases the step of nanofiller dispersion and allows to reach higher curing degree compared to the epoxy precursor formulation without BDE.

As nanofiller, different carbon nanostructured fibre-shaped fillers and layer-shaped filler can be embedded in the epoxy resin matrix with the aim of improving chemical and physical properties of the resin such as mechanical and electrical properties of the resin. The results related to many experiments on this formulation highlight an easier production process of nanofilled resin due to the decrease in the viscosity value.

The presence of reactive diluent BDE in the initial epoxy precursor formulation, which surprisingly determines a decrease in the water absorption, very positively affects the electrical properties of nanofilled formulations; in fact, neither increase in the electrical percolation threshold (EPT), nor decrease in the electrical conductivity beyond the EPT are found in the epoxy resins of the invention. It is amazing that a such formulation with aliphatic groups retains the same advantage of the only epoxy precursor formulation in terms of mechanical properties and electrical properties (for nanofilled formulations) and, in addition, many drawbacks of structural epoxy resins can be overcome.

The resins of the invention, thanks to the low value of water absorbed therein and to the very interesting mechanical properties, can be applied in a large number of different fields. In particular, they can become essential for aerospace, automotive, nautical and in general, infrastructural applications also where the use of embedded nanofillers is necessary to attain certain advantages, such as e.g. "high electrical conductivity" to head off the remarkable risk of a puncture of structural parts during a lightening event and or in general to optimize optical, electromagnetic and mechanical properties of the formulation.

The advantages of the resins of the invention include the high mechanical resistance/weight ratio, the good fatigue resistance, the excellent resistance to the water absorption, the excellent corrosion resistance and the high flexibility for different types of application.

The resin of the invention (TGMDA/BDE-DDS)can be advantageously cured with a non-stoichiometric amount of DDS (hardening agent) to obtain the same and further advantages with respect to the epoxy mixtures cured with the hardener agent at stoichiometric concentration. In particular, tests performed after conditioning the samples at 120°C under vacuum for 24 hours to remove also the bonded water in the structure (for example $H_2O$ molecules embedded inside the resin structure through hydrogen bonds) highlight considerable advantages in terms of moisture content, mechanical properties (more appropriate values in the toughness of the described cured formulations) cure kinetics, cure degree, and possibility to apply the formulation loaded with the conductive described nanofillers.

The stoichiometric amount of DDS was calculated for 20 g of the epoxy precursors resins (16g of TGMDA and 4g of BDE monomer). This amount was expressed as parts (wt) per 100 parts of resins:

$$phr\ of\ DDS = \frac{DDS\ H_{eq\ wt}*100}{EEW_{mix}} \qquad (1.5)$$

The numerator is the DDS-Hydrogen equivalent weight calculated as:

$$DDS\ H_{eq\ wt} = \frac{Mw_{DDS}}{n°\ of\ active\ H} \qquad (1.6)$$

where MwDDS is equal to 248.302 g/mol and the number of active hydrogens is equal to 4. The value of Amine H equivalent weight calculated by eq. (1.6) is 62.08 g/eq.

EEWmix is the epoxides equivalent weight of the mixture. Considering that the epoxy mixture is a blend of two reactive components (TGMDA and BDE), the epoxide equivalent weight (EEW)mix of the total mixture includes the epoxy rings of epoxy precursors and diluent. The amount of curing agent to add to 100 parts of formulation was calculated using the following equation:

$$EEW_{mix} = \frac{wt_{TGMDA}+wt_{BDE}}{\frac{wt_{TGMDA}}{EEW_{TGMDA}}+\frac{wt_{BDE}}{EEW_{BDE}}} \qquad (1.3)$$

The values of, EEWTGMDA=MWTGMDA/functionality of epoxy monomer, and EEWBDE=MWBDE/functionality of epoxy monomer, were respectively 115 and 101. The value of 111.982 g/eq for the (EEW)mix resulted from eq.(1.3)

$$EEW_{mix} = \frac{16+4}{\frac{16}{115}+\frac{4}{101}} = 111.982 \quad g/eq$$

The value of parts by wt per 100 parts resin (phr) of DDS calculated by eq. (1.6) was;

$$phr\ of\ DDS = \frac{62.1*100}{111.982} = 55.46$$

then, the amount of DDS used was calculated by eq. (1.7)

$$wt\ of\ DDS = \frac{wt_{TGMDA}+wt_{BDE}}{100} * phr\ of\ DDS = 11.09\ g$$

Hence, the stoichiometric amount expressed in phr units is 55.46, e.g. 55.46 g of DDS for 100 g of precursor resins.

In sum, the advantages provided by the resins of the invention are:

1) Reduction of the moisture content thereof, also when such resins are filled with monodimensional and bidimensional conductive nanofillers.

2) Easiness in the step of nanofiller dispersion due to the decrease in the viscosity value. This allows to obtain high values in the electrical conductivity at very low concentration of nanofiller with respect to the already found values.

3) Increase in the storage modulus and fast hardener solubilization.

4) Higher curing degree compared to the epoxy precursor formulation, both unfilled and nanofilled, without BDE, so that an efficient strategy for energy-saving is obtained. This effect is of particular benefit for formulations loaded with unfunctionalized or functionalized nanofillers where higher temperatures are necessary to reach the same cure degree of the unfilled formulation.

5) Overcoming drawbacks related to the moisture absorption, insulating electrical properties and poor mechanical properties of conventional epoxy resins. The resins of the invention can be also applied when the glass transition temperature $T_g$ thereof (e.g. when used to manufacture CFRCs) must be high enough (also up to 260 - 270 °C) for the required application and/or when high values in the storage modulus are required (also up to 12000 MPa - 5000 MPa in the temperature range of -90 °C to +200 °C) and thermal stability at least up to 320°C is critical.

Examples of preparation processes of epoxy resins according to the invention and comparative, respectively, are now provided by way of illustrative, non-limiting example.

Example 1 (not inventive)

Materials and sample preparation

An epoxy precursor (TGMDA) is mixed with the epoxy reactive monomer 1,4-Butandioldiglycidylether (BDE) that acts as flexibilizer and reactive diluents.

These compounds, both containing epoxy moieties, were obtained by Sigma-Aldrich. The curing agent used is 4,4'-diaminodiphenyl sulfone (DDS). The epoxy precursor formulation is obtained by mixing TGMDA with BDE monomer at a concentration ratio of 80%: 20% by wt. DDS is added at a stoichiometric concentration with respect to the epoxy rings of both reactive diluent and epoxy precursor, and mixed at 120°C.

The mixture is cured by a two-stage curing cycle: a first isothermal stage is carried out at the lower temperature of 125°C for 1 hour and a second isothermal stage is carried out at higher temperatures in the range 180°C or 200°C for 3 hours. The resin obtained is named TGMDA+DDS+BDE(20%)(200°C).

Water Transport Properties

The sorption at equilibrium of liquid water ($C_{eq}$) of the above resin TGMDA+DDS+BDE(20%)(200°C) as well as of a reference resin TGMDA+DDS(200°C) (i.e. a resin cured with the same curing cycle up to 200°C, without using BDE) were measured.

The fully cured epoxy resin samples for use in this experiment were cut into samples with dimensions of $40\times20\times0.50$ mm immediately after the curing cycle. The thickness of the water absorption test samples was made small, deliberately, compared to its width and length, such as edge effects could be ignored and simple one-dimensional diffusion model analysis can be applied without incurring significant error. After conditioning samples at 30°C under vacuum for 10 days to ensure complete dryness, the specimens were placed into distilled water chambers maintained at constant temperatures of 25°C. The specimens were weighed periodically using a digital balance with 0.01 mg resolution to determine the percent weight change, and, thus, water uptake. The water gain percentage, Ct %, was determined from the equation:

equation (1)

$$C_t = \frac{W_t - W_d}{W_t} \times 100 \quad (eq.\ 1)$$

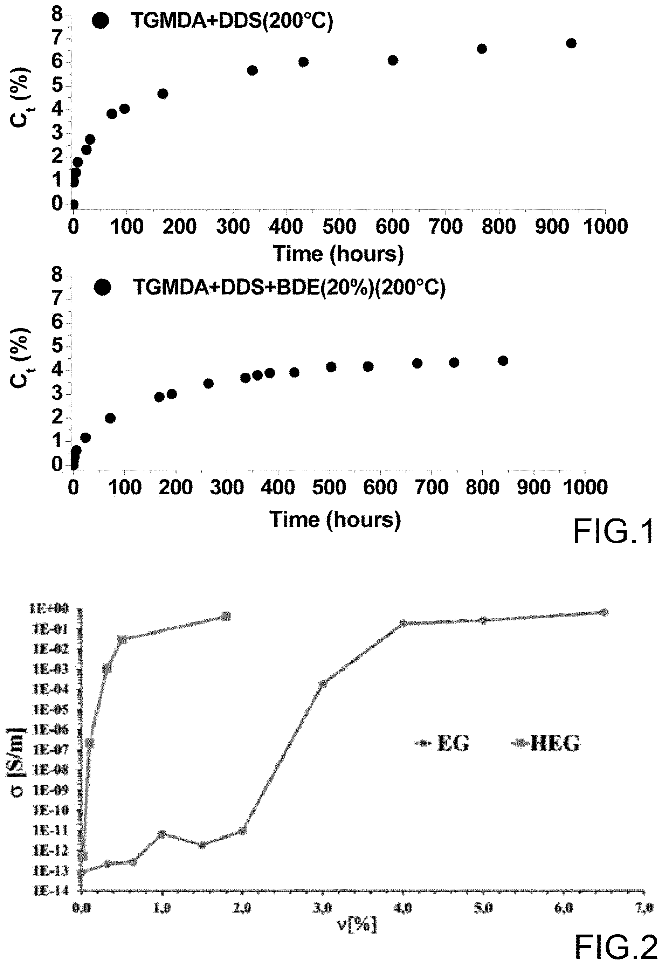

wherein, $W_t$ is the weight of the water-sorbed epoxy specimen at t time and $W_d$ is the initial weight of the dry specimen. The equilibrium concentration of water Ceq was calculated considering the maximum amount of absorbed water (plateau condition in Fig. 1) .

The specimens were periodically removed, dried and immediately weighed, and then returned to the water bath.

The drying step is performed to ensure the removal of excessive surface (superficial) water; specimens were gently wiped dry using clean, lint-free tissue paper.

The aforementioned absorption procedure yielded a series of water gain versus time curves (Fig. 1).

Figure 1 illustrates the diagrams reporting the data of water concentration vs. time for such resins, with water activity (a=1) at the temperature of 25°C.

As it is apparent therefrom, the sorption at equilibrium of liquid water ($C_{eq}$) decreases from 6.81 to 4.41 in the resin of the invention, so that a percentage of 20 % wt. of BDE reduces the value in $C_{eq}$ of about 35%.

This percentage is very relevant for application of epoxy resins in aeronautics, because absorbed moisture reduces the matrix-dominated mechanical properties. Absorbed moisture also causes the matrix to swell. This swelling relieves locked-in thermal strains from elevated temperature curing. These strains can be large and large panels, fixed at their edges, can buckle due to the swelling strains. In addition, during freeze-thaw cycles, the absorbed moisture expands during freezing and can crack the matrix. In addition, during thermal spikes, absorbed moisture can turn to steam. When the internal steam pressure exceeds the flatwise tensile strength of the composite, the laminate will delaminate.

Furthermore, water vapor absorption decreases the performance of aircraft materials for the negative effects on mechanical properties, corrosion and weight. Data concerning the effect of water absorption on the mechanical properties of epoxy resins show a dramatic lowering of the glass transition temperature and the consequent degradation of high-temperature properties.

Example 2 (not inventive)

Material Preparation

The first step of preparation provides for blending the same ingredients - TGMDA and BDE - in the same proportions indicated for example 1. Such blend and the hardening agent DDS are mixed at 120°C and then various nanofillers (carbon nanotubes (CNT), carbon nanofibers, graphene layers) are added and incorporated into the matrix by ultrasonication for 20 minutes by using an Hielscher device, model UP200S-24KHz high, power ultrasonic probe.

All the mixtures are cured by a two-stage curing cycle: a first isothermal stage is carried out at the lower temperature of 125°C for 1 hour and a second isothermal stage is carried out at higher temperatures in the range 180°C or 200°C for 3 hours. The obtained resins are named TGMDA+DDS+BDE(20%)+ CNT(X%)(Y°C) where X is the CNT percentage and Y is the temperature of the second stage.

As nanofillers, multiwall carbon nanotubes (MWCNTs), carbon nanofibers and graphene layers were employed. The MWCNTs (3100 Grade) was obtained from Nanocyl S.A. The specific surface area of multi-wall carbon nanotubes determined with the BET method is around 250-300 $m^2/g$, the carbon purity is >95% with a metal oxide impurity <5% as it results by thermogravimetric analysis (TGA).

CNFs were produced at Applied Sciences Inc. and were from the Pyrograf III family.

The as-reiceved CNFs used in this invention are labeled as PR25XTPS 1100.

Sample PR25XTPS1100 was heat treated to 2500 °C giving the sample the name PR25XTPS2500. The heat treatment was performed in an atmosphere controlled batch furnace.

Measurements of sorption and diffusion of liquid water at 25 °C for unfilled resin, resin with 0.5% of MWCNT, resin with 0.5% of heat-treated CNFs (PR25XTPS2500)and resin with 1% of as-received CNFs (PR25XTPS1100)were effected with the same methodology used for Example 1.

Table 1 contains the Diffusion parameters (D) and Sorption values at equilibrium of liquid water (Ceq) of the various tested resins, namely epoxy resins without BDE, with diluents and nanofillers.

TABLE I

| sample | $C_{eq}$ (%) | D ($cm^2/s$) |
|---|---|---|
| TGMDA+DDS+BDE(20%)(200°C) | 4,41 | 1,11E-09 |
| TGMDA+DDS(200°C) | 6,81 | 1,29E-09 |
| TGMDA+DDS+BDE(20%)+ PR25XTPS2500(0,64%)(200°C) | 5,04 | 1,25E-09 |
| TGMDA+DDS+BDE(20%)+MWCNT(0,5%)(200°C) | 5,25 | 1,11E-09 |
| TGMDA+DDS+BDE(20%)+PR25XTPS1100(1,0%)(200°C) | 4,92 | 1,35E-09 |
| DGEBA+DDS | 4,03 | 2,00E-09 |

The data in Table I show that at high water activity (a=1) the nanofilled samples having the same thickness are characterized by values of $C_{eq}$ only slightly higher than the unfilled matrix. Hence, these data prove that advantages in the water transport properties can be combined with the better mechanical performance of the formulation of the invention based on the tetrafunctional epoxy precursor and reactive diluent.

In fact, it can be inferred from the data of Table I that the thermodynamic interaction of the amorphous resin of the invention with liquid water is almost not changed by the presence of the carbon nanotubes and/or heat-treated and untreated CNFs. Similar results were obtained with embedded exfoliated graphite as nanofiller inside the same formulation. In this last case, with exfoliated graphite (EG) characterized by high values in the exfoliation degree able to strongly increase the electrical conductivity, $C_{eq}$ values less than 5.4 % (D=1.72E-09) were obtained also for concentration of graphite up to 3%.

Example 3 (not inventive)

Nanofilled resins prepared according to Example 2 were subjected to measurement of electrical properties.

It was found that the addition of BDE to TGMDA eases the step of nanofiller dispersion due to the decrease in the viscosity value, allowing to obtain high values in the electrical conductivity at very low concentration of nanofiller.

An amount of CNF less than 0.32% allows to manufacture a resin characterized by an electrical conductivity of 1.37 S/m. Similar results are obtained using as nanofiller MWCNTs and exfoliated graphite (HEG) characterized by high degree of exfoliation. The electrical conductivity of the formulation TGMDA+DDS+BDE(20%) filled with exfoliated graphite is strongly dependent on the degree of graphite exfoliation. In fact, with exfoliated graphite, a small increase in the exfoliation degree and therefore in the specific surface area (BET) very positively affects the electrical conductivity. The values detected for the electrical parameters highlight that results very similar to those obtained with mono-dimensional shaped nanofiller can be obtained acting on the degree of exfoliation of the graphite.

Figure 2 is a diagram reporting the data of electrical conductivity in function of the nanofiller percentage for two kinds of exfoliated graphite, having exfoliation degree 56% - BET = 14.7 $m^2$/g and exfoliation degree 60% - BET = 16.3 $m^2$/g, respectively.

The results shown in Figure 2 demonstrate that, by using bi-dimensional, cheaper and easier to be processed exfoliated graphene sheets, it is possible formulating composites characterized by the same values in the electrical conductivity found for mono-dimensional conductive nanofillers (MWCNTs and CNFs). In particular, a very small concentration of exfoliated graphite can be used in the case of graphite characterized by high value in the exfoliation degree as evidenced by the very small value in the electrical percolation threshold (EPT) (between 0.1% - 0.4 %). The value in EPT shown in figure 2 (see the HEG -square dots-curve) was never found in literature for epoxy resin loaded with this low concentration of graphene layers. Of course, this advantage is additional to other advantages found for epoxy resins loaded with graphene layers.

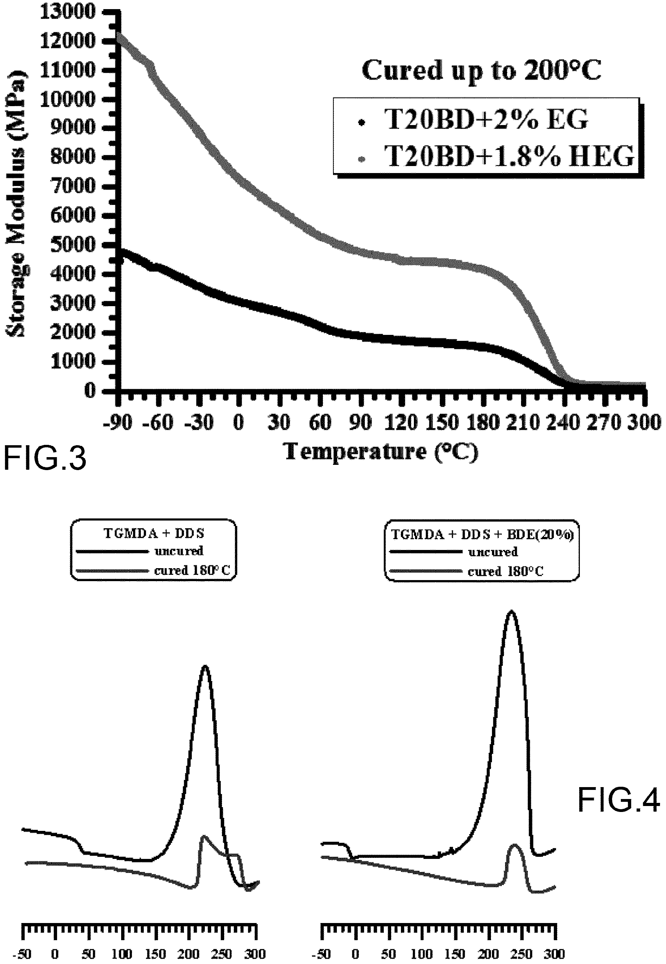

Figure 3 is a diagram reporting the data of Storage modulus in function of temperature for the resin TGMDA+DDS+BDE(20%) filled with exfoliated graphite (exfoliation degree 56% - BET = 14.7 $m^2$/g) - sample T20BD+2% EG, and exfoliated graphite (exfoliation degree 60% - BET = 16.3 $m^2$/g) sample T20BD+1.8 % HEG.

In sum, the employment of exfoliated graphite characterized by high values in the exfoliation degree is of particular benefit in order to simultaneously satisfy two requirements:

a) high electrical conductivity at very low percentage of exfoliated graphite, and
b) strong increase in the storage modulus in a wide range of temperatures, in particular in the range of temperature between -90 and 210 °C.

Example 4 (not inventive)

The curing properties of the resins of Example 1 were analyzed in-depth.

Differential Scanning Calorimetry Results.

The cure behavior of the epoxy matrix was studied by Differential Scanning Calorimetry (DSC). This technique is especially useful for studying the cure of reactive epoxy systems because the curing is accompanied by the liberation of heat.

DSC has been used herein for the estimation of the DC of the samples under the assumption that the exothermic heat evolved during cure is proportional to the extent of reaction. This assumption has already been adopted by Horie K, Hiura H, Sawada M, Mita I, Kambe H. Calorimetric investigation of polymerization reactions. III. Curing reaction of epoxides with amines. J Polym Sci Part A-1: Polym Chem 1970; 8:1357-72, and Edwards, G, Ng QY. Elution behavior of model compounds in gel permeation chromatography. J Polym Sci [C] 1968; 21:105-117. The DC can be determined from the total heat of reaction ($\Delta HT$) of the curing reaction and the residual heat of reaction ($\Delta H_{resid}$) of the partially cured epoxy resin as follows:

$$DC = \frac{\Delta H_T - \Delta H_{resid}}{\Delta H_T} \times 100$$

To obtain fraction reacted at various temperatures, a series of isothermal experiments was performed. To secure accurate total $\Delta H$ values from isothermal studies, dynamic runs were made after the isothermal curing cycle to obtain the residual heat of reaction. The total heat of reaction was considered as follows:

$$\Delta H_T = \Delta H_{iso} + \Delta H_{resid}$$

where $\Delta H_{iso}$ and $\Delta H_{resid}$ are the areas under the isothermal and dynamic thermograms, respectively.

The cure degree of the system TGMDA+DDS and TGMDA+DDS+BDE(20%) after a two stage curing cycle composed of a first step of 125°C for 1 h and a second step at the higher temperature of 180°C for 3 hours were analyzed. The results of calorimetric analysis performed on the two formulations are illustrated in Fig. 4 reporting the DSC curves of: a) the uncured and cured epoxy resin TGMDA+DDS (without reactive diluent) on the left side, and b) the uncured and cured epoxy mixture TGMDA+DDS+BDE(20%)(TGMDA with reactive diluent/DDS) on the right side.

Figure 4 illustrates the DSC curve of each formulation before (fresh sample) and after the curing cycle (cured sample). A comparison of the DSC traces highlights a reduced $\Delta H_{resid}$ for the sample of the invention with BDE.

The cure degrees for TGMDA+DDS and TGMDA+DDS+BDE(20%) were found to be 80% and 91% respectively. This result has proven that, in the case of TGMDA+DDS+BDE(20%) system, the presence of reactive diluent BDE imparts to the segments of epoxy precursor higher mobility than the epoxy precursor alone; this in turn causes an increases in the efficiency of the curing process increasing the cure degree of about 14% using the same curing cycle.

The inclusion of MWCNTs (0.32%) in the epoxy formulation TGMDA+DDS+BDE(20%) highlighted that this gain is not enough when this formulation also includes MWCNTs. In fact, the DC decreases from 91% to 86% by adding CNTs. To increase the value of the curing degree of the nanofilled formulation, the sample was tested after a curing cycle with the second step at the higher temperature of 200°C for 3 hour. The DC value was found to be 94%, an acceptable value for aeronautic epoxy formulations.

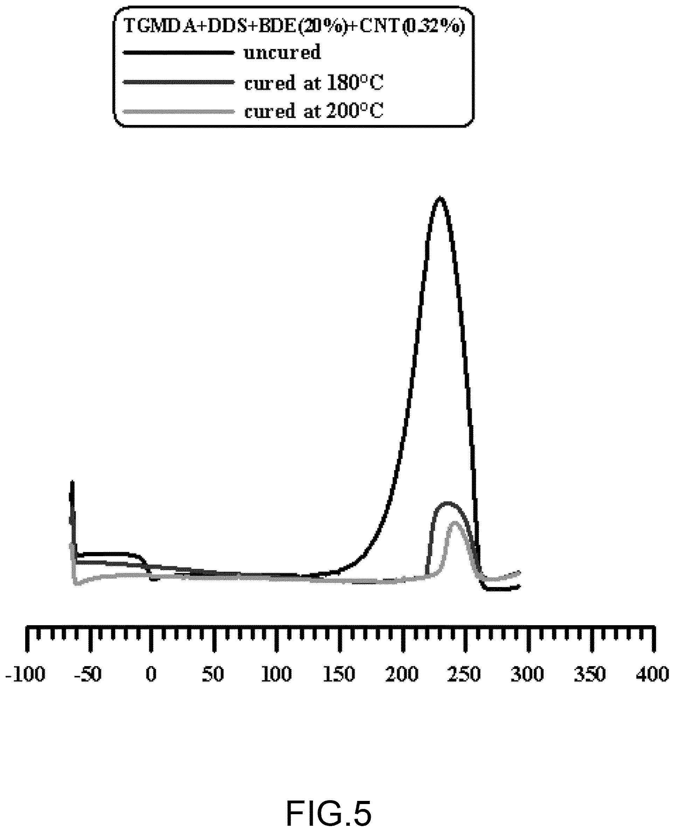

Figure 5 illustrates DSC curves of the uncured epoxy mixture TGMDA+DDS+BDE(20%), and the same epoxy mixture cured according two different curing cycles.

The curing degree for all the nanofilled formulations was always found higher than 92% for the curing cycle with the second step at higher temperature.

On the other hand, temperatures higher than 220°C are necessary to obtain similar values for curing degree of nanofilled epoxy mixtures in absence of reactive diluent BDE.

The obtained results demonstrate that the presence of monodimensional nanofillers, such as CNTs, at a concentration able to obtain nanocomposites just beyond the EPT can reduce the crosslinking degree. Therefore, the presence of the reactive diluent BDE is of particular benefit due to the possibility of increasing the crosslinking density at lower curing temperature.

Dynamic Mechanical Results

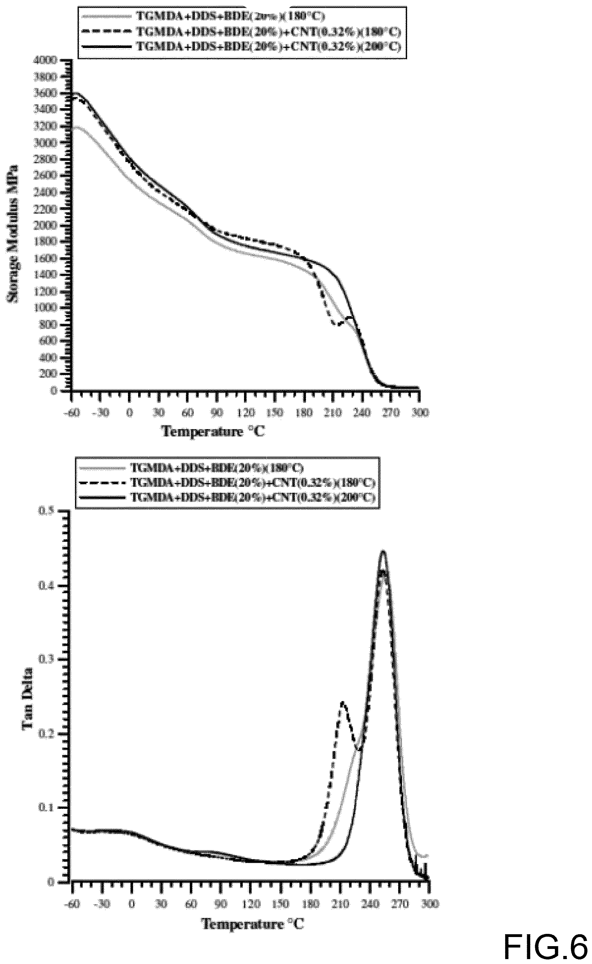

Figure 6 illustrates the Storage modulus (MPa) (at the top), and Loss factor (tan$\delta$) (at the bottom) as a function of temperature for pure epoxy resin and the composite resin with 0.32 wt% MWCNTs solidified up to 180 and 200°C, respectively.

The diagrams of figure 6 show that the incorporation of a small concentration of MWCNTs (0.32%) in the temperature range -60 to 180°C causes an increase in the elastic modulus value with respect to the epoxy matrix. The different temperature of the second stage of the curing cycle changes the curve profiles at temperature higher than 70°C. For the lower temperature of the curing cycle (second stage), the nanofilled composite shows a non-progressive decrease in the value of the elastic modulus with an unforeseen increase between 210 and 240°C before again decreasing. This behavior is very likely due to an increase in the cross-linking density during the heating. This increase is not observed in the pure resin (unfilled sample) with the same history of the curing cycle, sample TGMDA+DDS+BDE(20%)(180°C). This behavior can be explained if we assume that the inclusion of carbon nanotubes well dispersed inside the matrix causes a reduction of the cross-linking density in a fraction of the epoxy matrix in close contact with the nanofiller. This also explain two peaks in the tan $\delta$ of the sample TGMDA+DDS+BDE(20%)(+CNT(0.32%)(180°C) indicating the presence of a lower temperature glass transition (at 215°C), beside the main transition at the same temperature as the pristine resin (260°C).

It is very likely that this second lower transition is due to unreacted molecular segments that cause inhomogeneities from regions of varying crosslink density; since the samples TGMDA+DDS+BDE(20%)(+CNT(0.32%)(180°C) and TGMDA+DDS+BDE(20%)(180°C) are formulated with the same stoichiometry and curing history, the lower cross-linking density can be ascribed only to the nanoinclusions. This secondary peak, active at a lower temperature disappears for the same composite cured up to 200°C (see sample TGMDA+DDS+BDE(20%)(+CNT(0.32%)(200°C). A more effective curing cycle at higher temperature up to 200°C allows to overcome the drawback due to the inclusion of nanofiller inside the epoxy matrix. It was also observed that a different percentage of MWCNTs (data not reported here) is reflected in both the location and magnitude of the transition peak at lower temperature. These results indicate that, for the nanofilled composites, the curing history must to be optimized with respect to the unfilled formulations.

Example 5 (not inventve)

According to this example, the glass transition temperature and the thermal stability of resins of the invention was studied.

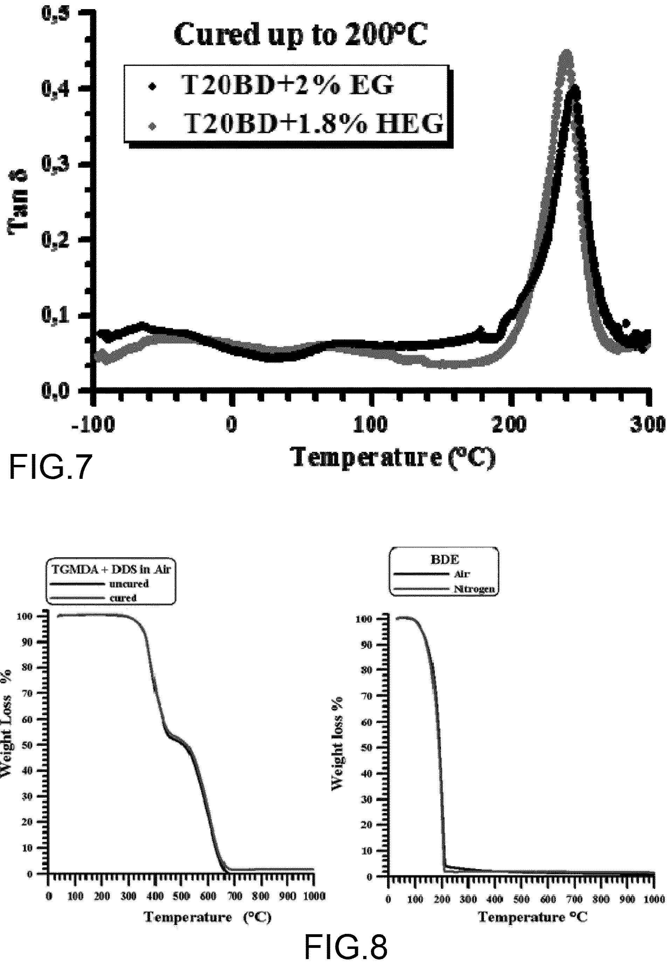

Figure 7 is a diagram illustrating the loss factor (tan $\delta$) of the formulations filled with exfoliated graphite, whose storage modulus are shown in Example 3.

Figure 7 shows that the Glass transition temperature of the nanofilled formulations is between 240÷280 °C; similar results are obtained for the same epoxy matrix nanofilled with CNFs and CNTs.

Hence, it is demonstrated that the presence of BDE does not impair the glass transition temperature and the thermal stability of the formulations.

Thermogravimetric analysis (TGA) too can be used to study the oxidative stability of the formulated resins and components thereof.

Figure 8 illustrates the thermogravimetric curves in air of: a) the uncured and cured unfilled epoxy resin TGMDA/DDS without BDE on the left side, and b) the reactive diluent BDE on the right side. The unfilled epoxy mixture begins to degrade at 320°C, while the reactive diluent at 120°C.

Figure 9 shows the thermogravimetric curves in air of: a) the uncured and cured unfilled epoxy mixture TGMDA+DDS+BDE(20%) (TGMDA with reactive diluent/DDS) on the left side, and b) the same epoxy formulation nanofilled with a percentage of 0.32% of MWCNTs on the right side.

The curve of the uncured mixture shows at 120°C the beginning of a first step of degradation involving a very small fraction of materials due to the degradation of the reactive diluent. On the other hand, the cured mixture begins to degrade at 320°C which is the temperature at which the epoxy mixture composed of only the epoxy precursor TGMDA starts to degrade. This is a very useful result which also highlights that, when the reactive diluent BDE is present in the epoxy network, it is thermically stable up to 320°C.

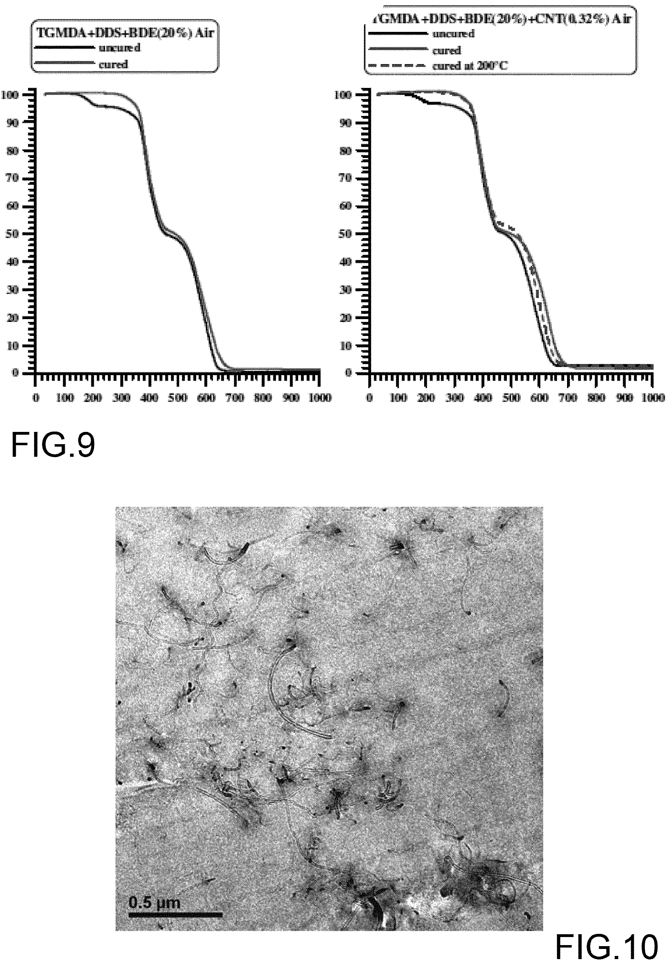

The right side of figure 9 shows the thermogravimetric curves in air of the same epoxy formulation nanofilled with a percentage of 0.32 % of MWCNTs. No meaningful changes in the thermogravimetric curves are apparent for the cured nanofilled formulation, so that it can be definitely concluded that the reactive diluent BDE does not impair the thermal stability of the formulation.

Example 7 (not inventive)

According to this example, a morphological investigation of resins of the invention was conducted and confirmed that the use of the reactive diluent (BDE) in the initial epoxy precursor formulation (TGMDA) is of benefit for the dispersion of nanofillers therein.

Figure 10 is a TEM image of an epoxy resin of the invention at a loading rate of 0.32 per cent by weight of CNTs. Such image confirms that single nanotube are distributed along the sample due to the easiness in the dispersion step. Analogously, TEM investigation for sample with a lower percentage of 0.05% of nanofiller confirmed that completely separated nanotubes are embedded in the matrix.

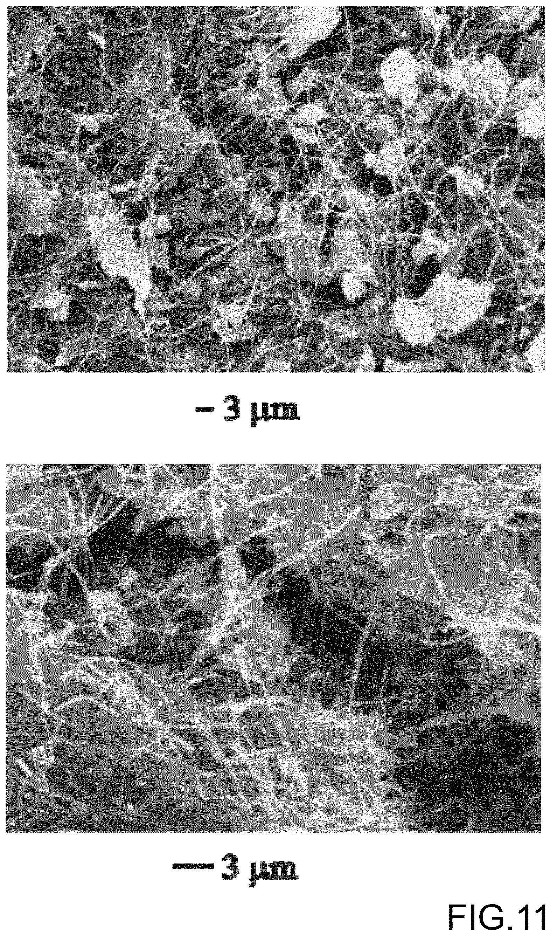

Figure 11 illustrate fracture surface SEM images of nanofilled epoxy resins of the invention filled with 0.64 per cent by weight of as-received CNFs (image on the top), and of heat-treated CNFs (image on the bottom), confirming that also in this case a very good dispersion of the nanofibers is obtained.

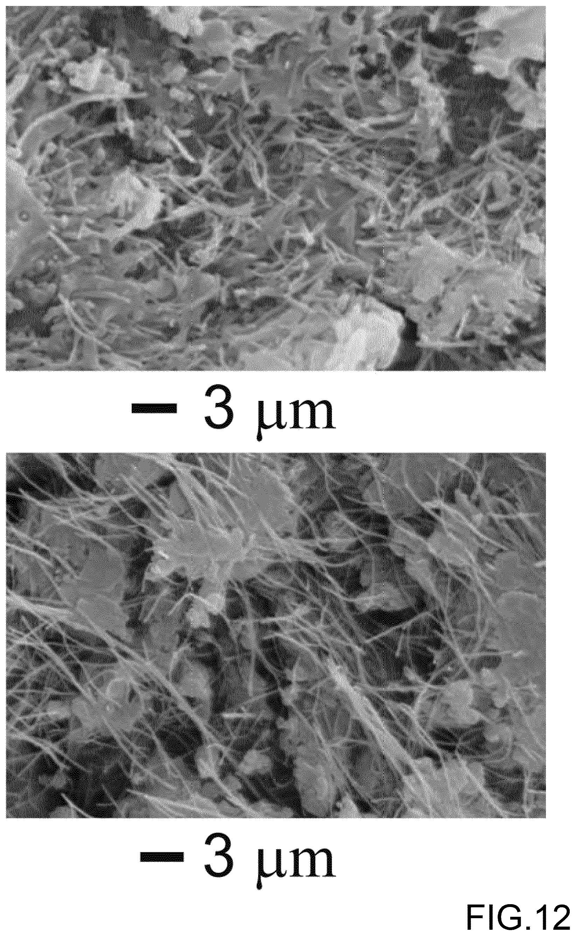

Figure 12 illustrate fracture surface SEM images of nanofilled epoxy resins of the invention filled with 1.0 per cent by weight of CNFs.

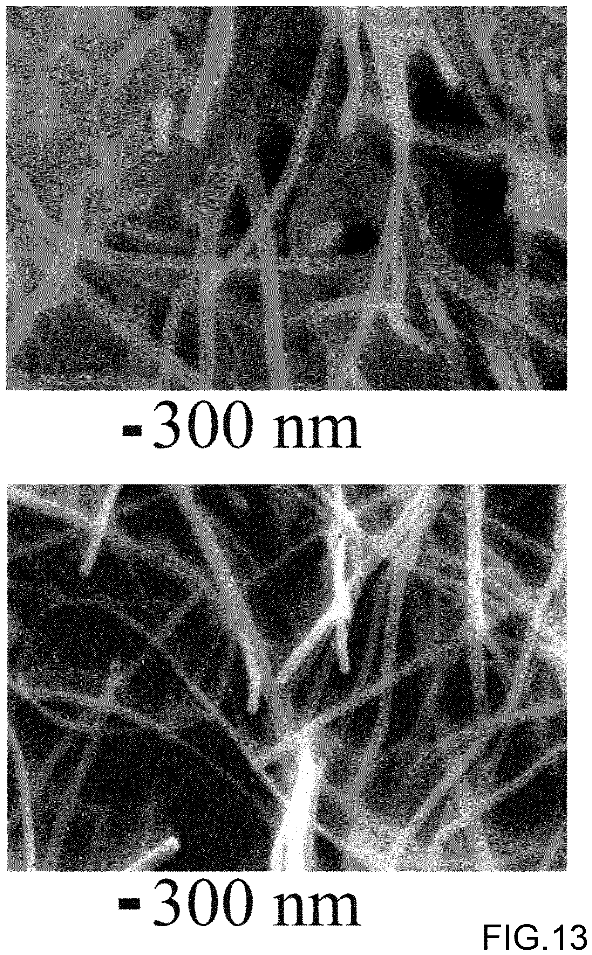

Figure 13 is an enlargement of the images of figure 12.

The images of the latter figures thus confirm that CNFs are uniformly distributed in the epoxy matrix also for higher amount thereof.

Example 8 (inventive)

Water Transport Properties of mixture cured using a non-stoichiometric concentration of hardener agent.

As before described, the appropriate choice of the amount of hardening agent can reduce the moisture absorbed in the epoxy matrix giving low values in the Ceq also after conditioning the samples at 120°C under vacuum for 24 hours to remove also the bonded water in the structure. Is worth noting that in these last cases low values in the Ceq are quite surprising. In fact, it was found that the chemical structure of the formulated epoxy mixture (using a non-stoichiometric amount of hardener), manifests peculiar properties with respect to the water sorption due to a strong reduction of the number of polar groups and sites able to bond water molecules.

Examples of composition formulations are described below.

The epoxy mixture is prepared as described below.

An epoxy precursor (TGMDA) is mixed with the epoxy reactive monomer 1,4-Butandioldiglycidylether (BDE). The curing agent used is 4,4'-diaminodiphenyl sulfone (DDS). The epoxy precursor formulation is obtained by mixing TGMDA with BDE monomer at a concentration ratio of 80%: 20% by wt. DDS is added at the non-stoichiometric ratios of amine/epoxy.

In particular, for this example, 44.4 phr DDS hardner was used. Mixing temperature and curing cycle are as described in the example 1. The resins obtained are named TGMDA+0.8DDS+BDE(20%)(200°C).

The sorption at equilibrium of liquid water (Ceq) of the above resin TGMDA+0.8DDS+BDE(20%)(200°C), as well as of the reference resin TGMDA+DDS(200°C) and the same resin cured at stoichiometric concentration of hardener TGMDA+DDS+BDE(20%)(200°C) treated in same way (after conditioning the samples at 120°C under vacuum for 24 hours) were measured.

The experimental procedure for this investigation is described in Example 1.

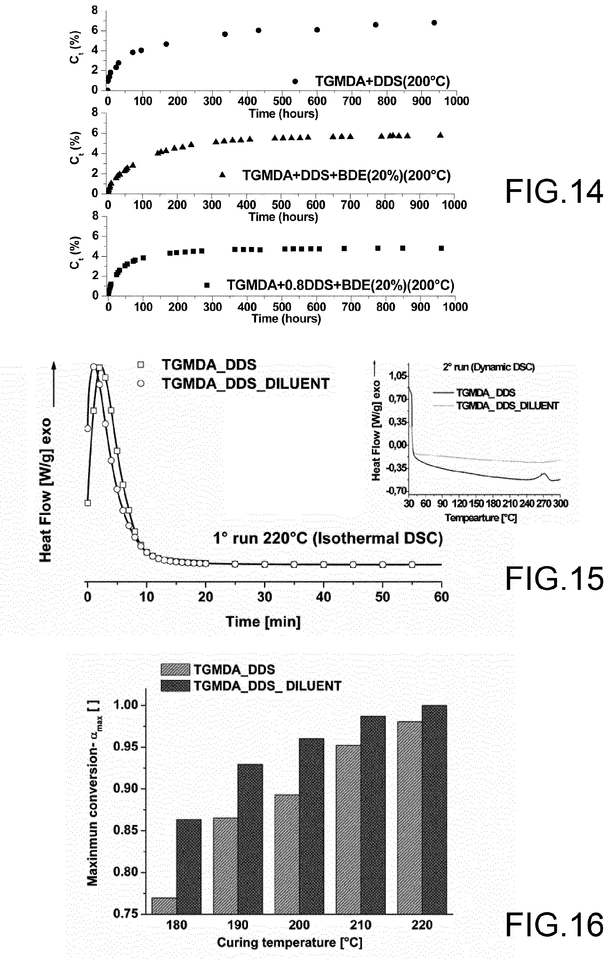

Figure 14 illustrates the diagrams reporting the data of water concentration vs. time for such resins, with water activity (a=1) at the temperature of 25°C.

As it is apparent therefrom, the sorption at equilibrium of liquid water (Ceq) decreases from 6.81 to 5.76 for the sample TGMDA+DDS+BDE(20%)(200°C), and to 4.83 for the sample TGMDA+0.8DDS+BDE(20%)(200°C). The resin of the invention reduces the value in Ceq from a minimum of 15% at a maximum of 30%. This last reduction is of relevant importance because, after conditioning the samples at 120°C under vacuum for 24 hours, the percentage corresponding to the bonded water (ranging between 1,3 and 2.2 %)was not fully recovered as expected. Similar benefits have been observed also for nanofilled resins.

Example 9 (not inventive)

This example provides further evidence of the benefits related to use of reactive diluent in the formulation of the invention (formulation described in the Example 1). In particular, the use of the reactive diluent strongly increases the cure degree of the unfilled and nanofilled epoxy mixture. The lower is the curing temperature, the more relevant is this effect.

To evaluate the effect of the reactive diluent, on the curing cycle of the epoxy mixture of the invention, a differential scanning calorimeter (Mettler DSC 822) was used for isothermal cure experiments and for data analysis under a nitrogen flow of 20 ml/min. To select suitable temperatures for the required isothermal experiments, a dynamic DSC scan at a heating rate of 10 °C/min was first obtained. Temperatures above but near the onset of reaction were chosen. This method could avoid the improper choice of temperature, which may be too high or too low. Isothermal experiments were carried out at 180 °C, 190 °C, 200 °C, 210 °C, and 220°C. The reaction was considered complete when the signal leveled off to baseline. The total area under the isotherm curve, based on the extrapolated baseline at the end of the reaction, was used to calculate the isothermal heat of reaction, $\Delta H_i(t)$ (i= 180°C, 190°, 220°C), at a given temperature. After each isothermal scan, the sample was cooled rapidly in the DSC cell to 30 °C and then reheated at 10 °C/min to 300 °C to determine the residual heat of reaction, $\Delta H_{residue}$.

The total heat evolved during the curing reaction is $\Delta H_{tot}=\Delta H_i+\Delta H_{residue}$, where $\Delta H_i$ is the total heat released during the cycle isothermal. The degree of cure, $\alpha$, is related to the enthalpy released during the exothermic reaction of the resin components. The relation is given in following Equation

$$\alpha(T,t) = \frac{1}{\Delta H_{tot}} \int_0^t \left( \frac{dH}{dt} \right) dt = \frac{\Delta H_i(t)}{\Delta H_{tot}}$$

where $\Delta H_i(t)$ is the partial heat of reaction at a certain time and $\Delta H_{tot}$ is the total heat of reaction.

The effect of the reactive diluent leads to consider the possibility of being able to cure the resin at lower temperatures. This consideration is evident in the figure 15 in which the profiles of isothermal heating at 220°C for the two systems considered and the subsequent heating in dynamic mode are shown.

The peak temperature decreases from a value of 134 seconds for the system TGMDA_DDS to 66 seconds for the system TGMDA DDS DILUENT, while the residual heat of reaction is absent for the epoxy system with the reactive diluent (see insert in Figure 15).

This effect is more pronounced if the temperature of cure is lower, in fact the difference in maximum conversion obtained for both systems increases with the decrease of the temperature of cure as it is evident in Figure 16.

This behaviour can be related to more comprehensive cure and to the decrease of the viscosity. The decrease of the viscosity, obtained by the introduction of reactive diluent, allows the upper local motions of the chain segments. This would results in a smaller energy barrier of the segment motion, which is reflected on activation energy at later curing stages. This effect can also be advantageously exploited for the epoxy mixture of the invention loaded with conductive nanofillers with aim of imparting high electrical conductivity to the epoxy mixtures.

It shall be apparent that, applying the principles of the invention, the implementation details and the embodiments may be widely varied relative to what has been described by way of example only, within the scope defined by the following claims.

## Claims

1. Epoxy resin obtainable by curing with an hardening agent an epoxy precursor formulation containing at least a tetrafunctional epoxy precursor and the reactive diluent 1,4-Butandioldiglycidylether (BDE), wherein the hardening agent is 4,4'-diaminodiphenyl sulfone (DDS) and the amount of the hardening agent expressed as phr is lower than the stoichiometric amount of 55,46 with respect to the epoxy rings of both the reactive diluent and epoxy precursor, which stoichiometric amount is calculated according to the method as described in the present description, and is in the range 27,75 to 49,91, and wherein said epoxy resin contains 20% by weight of BDE.

2. Epoxy resin according to claim 1, wherein said tetrafunctional epoxy precursor is 4,4'-Methylenebis(N,N-diglycidylaniline) (TGMDA).

3. Epoxy resin according to any one of the previous claims, incorporating conductive nanofillers, such as carbon nanotubes, in particular SWCNTs, DWCNTs and MWCNTs, carbon nanofibers, carbon black, exfoliated graphite and graphene layers.

4. Epoxy resin according to any one of the previous claims, incorporating conductive nanofillers, such as carbon nanotubes, in particular SWCNTs, DWCNTs and MWCNTs, carbon nanofibers, carbon black, exfoliated graphite and graphene layers for the development of conductive coatings for resins and more specifically for aeronautic composites.

5. Epoxy resins according to claim 1 , which were cured by a curing cycle composed of a first isothermal step at 125 °C for 1 hour and a isothermal second step at 180 °C for 3 hours.

6. Epoxy resin according to claim 1, wherein the amount of the hardening agent DDS expressed as phr is in the range 38,82 to 49,91.

7. Epoxy resins according to any one of the previous claims, **characterized by** values in water sorption in the range 3% to 6%, and preferably 3% to 5%, for under-stoichiometric amount of DDS and after conditioning treatment at 120 °C under vacuum for 24 hours, and glass transition temperature between 180 °C and 280 °C, and preferably between 210°C and 280 °C, wherein the values of water sorption and glass transition temperature are measured according to the respective methods as described in the present description.

8. Epoxy resins according to any one of the previous claims characterized simultaneously by all the following features:

   1) moisture content in a range 3 to 5 wt. % referred to the amount of the resin;
   2) a content of conductive nanofiller in a range 0.1 to 1.0 wt. % referred to the amount of the resin, corresponding to an electrical conductivity in the range 10-1 to 3.0 S/m and constituting a value of the electrical conductivity beyond the electric percolation threshold value;
   3) glass transition temperature in the range 180°C to 280°C, wherein the values of glass transition temperature are measured according to the method as described in the present description.

9. Epoxy resin according to any one of the previous claims, **characterized by** values in water sorption in the range 3 to 6%, and more preferably 3 to 5%, wherein the values of water sorption are measured according to the method as described in the present description.

10. Epoxy resin according to claim 4 **characterized by** values in water sorption comprised in the range 3 to 6%, and more preferably 3 to 5%, wherein the values of water sorption are measured according to the method as described in the present description.

11. Epoxy resin according to claim 3 or 4, wherein said conductive nanofillers are incorporated by ultra-sonication treatment, preferably for a time in the range 10 to 30 minutes.

**Patentansprüche**

1. Epoxidharz, herstellbar durch Härten einer Epoxidvorläuferrezeptur, die mindestens einen tetrafunktionellen Epoxidvorläufer und den Reaktivverdünner 1,4-Butandioldiglycidylether (BDE) enthält, mit einem Aushärtungsmittel, wobei das Aushärtungsmittel 4,4'-Diaminodiphenylsulfon (DDS) ist und die Menge des Aushärtungsmittels, welche in phr ausgedrückt ist, geringer ist als die stöchiometrische Menge 55,46 bezüglich der Epoxidringe sowohl des Reaktivverdünners als auch des Epoxidvorläufers, wobei die stöchiometrische Menge gemäß dem in der vorliegenden Beschreibung beschriebenen Verfahren ermittelt wird und in dem Bereich von 27,75 bis 49,91 liegt und wobei das Epoxidharz 20 Gew.-% an BDE enthält.

2. Epoxidharz nach Anspruch 1, wobei der tetrafunktionelle Epoxidvorläufer 4,4'-Methylenbis(N,N-diglydidylanilin) (TGMDA) ist.

3. Epoxidharz nach einem der vorangehenden Ansprüche, enthaltend leitfähige Nanofüllstoffe wie Kohlenstoff-Nanoröhrchen, insbesondere SWCNTs, DWCNTs und MWCNTs, Kohlenstoff-Nanofasern, Ruß, Blähgraphit und Graphenschichten.

4. Epoxidharz nach einem der vorangehenden Ansprüche, enthaltend leitfähige Nanofüllstoffe wie Kohlenstoff-Nanoröhrchen, insbesondere SWCNTs, DWCNTs und MWCNTs, Kohlenstoff-Nanofasern, Ruß, Blähgraphit und Graphenschichten zur Entwicklung leitfähiger Beschichtungen für Harze und insbesondere für aeronautische Verbundwerkstoffe.

5. Epoxidharze nach Anspruch 1, welche durch einen Aushärtungszyklus zusammengesetzt aus einem ersten isothermen Schritt bei 125°C für 1 Stunde und einem isothermen zweiten Schritt bei 180°C für 3 Stunden gehärtet wurden.

6. Epoxidharz nach Anspruch 1, wobei die Menge an dem Aushärtungsmittel DDS, welche in phr ausgedrückt ist, im Bereich von 38,82 bis 49,91 liegt.

7. Epoxidharze nach einem der vorangehenden Ansprüche, **gekennzeichnet durch** Wasserabsorptionswerte im Bereich von 3% bis 6%, bevorzugt 3% bis 5%, für eine unterstöchiometrische Menge an DDS und nach der Konditionierung bei 120°C unter Vakuum für 24 Stunden, und eine Glasübergangstemperatur zwischen 180° und 280°C und bevorzugt zwischen 210°C und 280°C, wobei die Wasserabso rptionswerte und die Glasübergangstemperatur gemäß den entsprechenden in der vorliegenden Beschreibung beschriebenen Verfahren gemessen werden.

8. Epoxidharze nach einem der vorangehenden Ansprüche, **gekennzeichnet durch** das gleichzeitige Vorliegen sämtlicher folgender Merkmale:

1) Feuchtigkeitsgehalt in einem Bereich von 3 bis 5 Gew.-% bezogen auf die Harzmenge;
2) einen Gehalt an leitfähigem Nanofüllstoff in einem Bereich von 0,1 bis 1,0 Gew.-%, bezogen auf die Harzmenge, entsprechend einer elektrischen Leitfähigkeit im Bereich von 10-1 bis 3,0 S/m, und einen Wert der elektrischen Leitfähigkeit über den elektrischen Perkolationsschwellenwert hinaus bildend;
3) Glasübergangstemperatur im Bereich von 180°C bis 28 0°C, wobei die Glasübergangstemperaturwerte gemäß dem in der vorliegenden Beschreibung beschriebenen Verfahren gemessen werden.

9. Epoxidharz nach einem der vorangehenden Ansprüche, **gekennzeichnet durch** Wasserabsorptionswerte im Bereich von 3 bis 6%, bevorzugter 3 bis 5 %, wobei die Wasserabsorptionswerte gemäß dem in der vorliegenden Beschreibung beschriebenen Verfahren gemessen werden.

10. Epoxidharz nach Anspruch 4, **gekennzeichnet durch** Wasserabsorptionswerte, die im Bereich von 3 bis 6% liegen, bevorzugter im Bereich von 3 bis 5 %, wobei die Wasserabsorptionswerte gemäß dem in der vorliegenden Beschreibung beschriebenen Verfahren gemessen werden.

11. Epoxidharz nach Anspruch 3 oder 4, wobei die leitfähigen Nanofüllstoffe durch eine Ultraschallbehandlung eingebracht werden, bevorzugt für eine Zeitspanne im Bereich von 10 bis 30 Minuten.


**Revendications**

1. Résine époxy pouvant être obtenue par durcissement, avec un agent de durcissement, d'une formulation de précurseur époxy contenant au moins un précurseur époxy tétrafonctionnel et le diluant réactif éther diglycidylique de 1,4-butanediol (BDE), dans laquelle l'agent de durcissement est la 4,4'-diaminodiphénylsulfone (DDS) et la quantité de l'agent de durcissement exprimée en phr est inférieure à la quantité stœchiométrique de 55,46 par rapport aux cycles époxy du diluant réactif et du précurseur époxy, la quantité stœchiométrique étant calculée conformément au procédé tel que décrit dans la présente description, et se trouvant dans la plage de 27,75 à 49,91, et dans laquelle ladite résine époxy contient 20 % en poids de BDE.

2. Résine époxy selon la revendication 1, dans laquelle ledit précurseur époxy tétrafonctionnel est la 4,4'-méthylène-bis(N,N-diglycidylaniline) (TGMDA).

3. Résine époxy selon l'une quelconque des revendications précédentes, incorporant des nanocharges conductrices, telles que des nanotubes de carbone, en particulier des SWCNT, des DWCNT et des MWCNT, des nanofibres de carbone, du noir de carbone, des couches de graphène et de graphite exfoliées.

4. Résine époxy selon l'une quelconque des revendications précédentes, incorporant des nanocharges conductrices, telles que des nanotubes de carbone, en particulier des SWCNT, des DWCNT et des MWCNT, des nanofibres de carbone, du noir de carbone, des couches de graphène et de graphite exfoliées pour le développement de revêtements conducteurs pour des résines et plus spécifiquement pour des composites aéronautiques.

5. Résines époxy selon la revendication 1, qui ont été durcies par un cycle de durcissement composé d'une première étape isotherme à 125 °C pendant 1 heure et d'une seconde étape isotherme à 180 °C pendant 3 heures.

6. Résine époxy selon la revendication 1, dans laquelle la quantité de l'agent de durcissement DDS exprimée en phr se trouve dans la plage de 38,82 à 49,91.

7. Résines époxy selon l'une quelconque des revendications précédentes, **caractérisées par** des valeurs de sorption d'eau dans la plage de 3 % à 6 %, et de préférence de 3 % à 5 %, pour une quantité sous-stœchiométrique de DDS et après un traitement de conditionnement à 120 °C sous vide pendant 24 heures, et une température de transition vitreuse entre 180 °C et 280 °C, et de préférence entre 210 °C et 280 °C, dans lesquelles les valeurs de sorption d'eau et de température de transition vitreuse sont mesurées conformément aux procédés respectifs tels que décrits dans la présente description.

8. Résines époxy selon l'une quelconque des revendications précédentes, caractérisées simultanément par toutes les caractéristiques suivantes :

   1) teneur en humidité dans une plage de 3 à 5 % en poids par rapport à la quantité de la résine ;
   2) teneur en nanocharge conductrice dans une plage de 0,1 à 1,0 % en poids par référence à la quantité de la résine, correspondant à une conductivité électrique dans la plage de 10-1 à 3,0 S/m et constituant une valeur de la conductivité électrique supérieure à la valeur seuil de percolation électrique ;
   3) température de transition vitreuse dans la plage de 180 °C à 280 °C, dans lesquelles les valeurs de température de transition vitreuse sont mesurées conformément au procédé tel que décrit dans la présente description.

9. Résine époxy selon l'une quelconque des revendications précédentes, **caractérisée par** des valeurs de sorption d'eau dans la plage de 3 % à 6 %, et de préférence de 3 % à 5 %, dans laquelle les valeurs de sorption d'eau sont mesurées conformément au procédé tel que décrit dans la présente description.

10. Résine époxy selon la revendication 4, **caractérisée par** des valeurs de sorption d'eau comprises dans la plage de 3 % à 6 %, et de préférence de 3 % à 5 %, dans laquelle les valeurs de sorption d'eau sont mesurées conformément au procédé tel que décrit dans la présente description.

11. Résine époxy selon la revendication 3 ou 4, dans laquelle lesdites nanocharges conductrices sont incorporées par traitement de sonication aux ultrasons, de préférence pendant une durée dans la plage de 10 à 30 minutes.

FIG.1

FIG.2

14

FIG.3

FIG.4

FIG.5

FIG.6

FIG.7

FIG.8

FIG.9

FIG.10

– 3 μm

— 3 μm

FIG.11

— 3 μm

— 3 μm

FIG.12

-300 nm

-300 nm

FIG.13

FIG.14

FIG.15

FIG.16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2208231 A
- EP 0356946 A2
- US 4528305 A
- GB 2027715 A
- CN 103374207 A

### Non-patent literature cited in the description

- **PAGE S.A. et al.** Surface Energetic Evolution during Processing of Epoxy Resins. *Journal of Colloid and Interface Science,* 2000, vol. 222, 55-62
- **SONG J. et al.** Fluorescence Studies of Diaminodiphenyl Sulfone Curing Agent for Epoxy Cure Characterisation. *Macromolecules,* 1993, vol. 26, 4818-4824
- **HORIE K ; HIURA H ; SAWADA M ; MITA I ; KAMBE H.** Calorimetric investigation of polymerization reactions. III. Curing reaction of epoxides with amines. *J Polym Sci Part A-1: Polym Chem,* 1970, vol. 8, 1357-72
- **EDWARDS, G ; NG QY.** Elution behavior of model compounds in gel permeation chromatography. *J Polym Sci [C,* 1968, vol. 21, 105-117